# EUROPÄISCHE PATENTSCHRIFT

(11) **EP 3 086 267 B1**
(45) Veröffentlichungstag und Bekanntmachung des Hinweises auf die Patenterteilung: **03.04.2019**
(21) Anmeldenummer: 16166299.4
(22) Anmeldetag: 21.04.2016
(51) Int. Cl.: B65G 1/137, G06Q 10/08, G06Q 50/28

(54) **LADUNGSTRÄGER SOWIE SYSTEM AUS EINER VIELZAHL AN LADUNGSTRÄGERN**
LOAD CARRIER AND SYSTEM COMPRISING A PLURALITY OF LOAD CARRIERS
PORTEUR DE CHARGE ET SYSTEME COMPRENANT UNE PLURALITE DE PORTEURS DE CHARGE

(30) Priorität: 23.04.2015 DE 102015005202
(43) Veröffentlichungstag der Anmeldung: 26.10.2016
(73) Patentinhaber: Elitzsch, Carsten, 82418 Murnau (DE)
(72) Erfinder: Elitzsch, Carsten, 82418 Murnau (DE)
(74) Vertreter: Herrmann, Uwe

(56) Entgegenhaltungen:
- US-A- 5 959 568
- US-A1- 2005 149 226
- US-A1- 2007 159 999
- Bettina Von Janczewski: "Logistik Entdecken", , 1. Januar 2012 (2012-01-01), XP055281077, Dortmund Gefunden im Internet: URL:http://www.iml.fraunhofer.de/content/d am/iml/de/documents/OE%20983/Presse/Logist ik%20entdecken/Logistik_entdecken_13_onlin e_NEU.pdf [gefunden am 2016-06-16]

## Beschreibung

Die Erfindung betrifft einen Ladungsträger, insbesondere Kleinladungsträger, zur Aufnahme ein oder mehrere Transportgüter in einem Laderaum.

In der Logistik sind Ladungsträger als tragendes Mittel zur Zusammenfassung von Gütern zu einer Ladeeinheit definiert. Der durch den VDA (Verband der Automobilindustrie) standardisierte Kleinladungsträger (KLT) ist über nahezu alle fertigen Branchen und deren logistischen Versorgungsketten vertreten. Das Konzept hinter der "kleinen" Kunststoffbox ist modular auf der Grundfläche einer Euro-Palette oder der ISO-Palette aufgebaut. Die hieraus resultierende Stapelbarkeit auch unterschiedlich großer Modulboxen ermöglicht eine flächeneffiziente Verwendung hinsichtlich Bestückung und Transport von Waren hinweg über den gesamten Wertstrom.

Zur Kennzeichnung der Ladungsträger werden in der Industrie meist laminierte Papieretiketten eingesetzt, die einerseits zur Identifikation des Inhaltes der Ladungsträger dienen und andererseits alle relevanten Information des Versorgungskreises mit sich tragen. Teilweise werden in diesem Zusammenhang auch Barcodes zur Buchung von Materialbewegungen verwendet. Da die Papieretiketten aus logistischen Gründen der Box lose beigelegt werden, können diese leicht verloren gehen. Zudem bedürfen diese der manuellen Anpassung bei Änderungen des Ladungsträgerinhaltes, des Versorgungsorts sowie der Transportmenge des Ladungsträgers.

In technisch weiterentwickelten Umgebungen wie Endmontage- oder Distributionsumgebungen finden sich intelligente Etiketten in Form sogenannter RFID-Tags. Die Verwendung der RFID-Technik unterliegt jedoch gewissen beschränkenden Rahmenbedingungen, die einen flächendeckenden Einsatz in der Industrie kaum möglich machen oder unverhältnismäßig hohe Kosten verursachen. Als Zwei-Komponentensystem, bestehend aus aktivem Transmitter und passiven Transponder, fällt zudem für die Inbetriebnahme eines RFID gestützten Systems ein verhältnismäßig hoher Investitionsaufwand für die notwendige Infrastruktur an. Trotz dieser enormen Aufwendungen für die Installation der festen Infrastruktur kann eine stabile Verfügbarkeit dieser RFID gestützten Systeme nicht garantiert werden, da bedingt durch die genutzten Frequenzbereiche das System anfällig für Interferenzen ist. Klassische Verwendung findet RFID somit in separaten Arbeitsbereichen, die mittels Transmitterportalen voneinander getrennt werden. Verlässt nun die Ware den Bereich, erfolgt neben der Identifikation in der Regel eine automatisierte Warenbuchung. Eine Ortung der Ware bzw. des Ladungsträgers unabhängig zum Lesegerät bzw. der gesamten Infrastruktur des RFID gestützten Systems ist jedoch weiterhin nicht möglich.

Zur Stabilisierung und Beschleunigung von Kommisionierungsprozessen werden sogenannte "Pick-by-Light" Systeme eingesetzt. Hauptbestandteil des "PBL-Systems" ist eine am Fachboden angebrachte Fachanzeige (Steuerbox) bestehend aus einer Blickfangleuchte, einem Anzeigendisplay und je nach System ein bzw. mehrere Quittierknöpfe. Wird ein Kommisionierauftrag gestartet, signalisieren leuchtende Blickfangleuchten die Auftragszugehörigkeit. Die Installation der Fachanzeige erfolgt jedoch notgedrungen losgelöst vom eigentlichen Ladungsträger am Lagerplatz selbst und wird dadurch für jeden einzelnen Stellplatz notwendig. Dies macht eine konsequente und sorgfältige Pflege der Stellplätze und gegebenenfalls eine Anpassung der Fachanzeigen unumgänglich.

Als Stand der Technik offenbart US2005/0149226 Ladungsträger mit Kommunikationsmodul und Anzeigemittel. US5959568 offenbart vernetzbare RFID-Tags.

Die Aufgabe der vorliegenden Erfindung liegt in der Entwicklung eines neuartigen Ladungsträgers, der die aus dem Stand der Technik vorbekannten Varianten optimiert, um dadurch die zuvor aufgezeigten Nachteile zu überwinden.
Gelöst wird diese Aufgabe durch den erfindungsgemäßen Ladungsträger gemäß den Merkmalen des Anspruchs 1. Vorteilhafte Ausgestaltungen des Ladungsträgers sind Gegenstand der abhängigen Unteransprüche.
Erfindungsgemäß ist ein konventioneller Ladungsträger mit wenigstens einem Kommunikationsmodul zur bidirektionalen Kommunikation mit wenigstens einem weiteren Ladungsträger ausgestattet. Die Integration eines Kommunikationsmoduls mit bidirektionaler Kommunikationsfähigkeit eignet den Ladungsträger grundsätzlich dazu, Daten bzw. Informationen von anderen Netzwerkknoten zu empfangen bzw. Daten bzw. Informationen an diese zu versenden. Denkbar ist es ebenfalls, dass sich der Ladungsträger aufgrund entsprechender bidirektionaler Kommunikationsfunktion in ein vermaschtes Netzwerk mit wenigstens einem weiteren Netzwerkknoten bzw. wenigstens einem weiteren Ladungsträger einbinden lässt. Ein derartiges vermaschtes Netzwerk aus mehreren Ladungsträgern kommt ohne feste Infrastruktur aus.
Sinnvoll kann die optionale Ausstattung des Ladungsträgers mit wenigstens einem Netzwerkprozessor sein, der sich durch eine integrierte Routing-Logik auszeichnet, die zum Aufbau eines vermaschten Netzwerkes mit wenigstens einem weiteren Ladungsträger geeignet ist. Die Routing-Logik des Netzwerkprozessors erlaubt den Aufbau eines vermaschten Netzwerkes, auch als Ad-hoc Netz bezeichnet, dessen Netzwerkknoten durch eine Vielzahl von weiteren Ladungsträgern mit entsprechender Netzwerktechnik, d.h. bidirektionaler Kommunikationsfunktion, gebildet werden. Das Netzwerk kann vollständig vermascht sein, dies ist jedoch keine Voraussetzung. Informationen können von Knoten zu Knoten weitergereicht werden, bis sie letztendlich den Zielknoten erreichen.

Vermaschte Netze sind im Regelfall selbstheilend und dadurch sehr zuverlässig, d.h. wenn ein Knoten oder eine Verbindung blockiert ist oder ausfällt, kann sich das Netz darum herum neu stricken. Die Daten werden umgeleitet und das Netzwerk ist nach wie vor betriebsfähig. Damit kann mittels des erfindungsgemäßen Ladungsträgers ein äußerst stabiles Netzwerk aufgebaut werden, ohne dazu auf etwaige Infrastrukturkomponenten zurückgreifen zu müssen. Das Netzwerk kommt vielmehr ohne den Einsatz jeglicher Infrastruktur aus und kann daher kostengünstig an beliebigen Positionen des Warenstroms einfach und schnell aufgebaut werden. Im Gegensatz zur bekannten RFID Technologie ist zum einen ein bidirektionaler Informationsaustausch möglich zum anderen ist keine weitere Infrastruktur in Form von Transmittern bzw. Transmitterportalen notwendig. Durch die in den Ladungsträger integrierte Kommunikationstechnologie und dementsprechender Steuerungssoftware reift der Ladungsträger zu einem intelligenten Netzwerkknoten, der in der Lage ist, Informationen zu empfangen, weiterzuleiten und bereitzustellen.

Das Konzept vermaschter Netze lässt sich auf kabelgebundene wie auch auf Funknetzwerke, Stichwort mobile Ad-hoc-Netzwerke anwenden. Dazu kann der Ladungsträger mit einem entsprechenden Funkmodul als Kommunikationsmodul ausgerüstet sein. Werden mehrere Ladungsträger in einen gemeinsamen Funkbereich zusammengeführt, wird automatisch ein in sich vermaschtes Kommunikationsnetz zwischen den Ladungsträgern aufgebaut. Jeder hinzukommende Netzwerkknoten macht das Netz stabiler und somit ausfallsicherer, insbesondere hinsichtlich möglicher Interferenzen.

Ausreichend sind beispielsweise Funkmodule mit kurzer Reichweite und niedrigem Stromverbrauch, um dadurch die Standby-Zeit einzelner Ladungsträger zu optimieren. Eine kurze Reichweite ist aufgrund der kurzen Nachbarschaftsabstände bei der Unterbringung der Ladungsträger in Regalen oder der Stapelung auf Paletten ausreichend. Idealerweise ist die Funkreichweite des Funkmoduls derart dimensioniert, so dass lediglich unmittelbar benachbarte Ladungsträger in einem Regal bzw. innerhalb eines Stapels erreicht werden können. Denkbar ist ein maximaler Funkradius von wenigen Metern, beispielsweise im Bereich von 1m bis 10m. Die Kommunikation mit den übernächsten Nachbarn erfolgt in diesem Fall mittelbar über die direkten Nachbarknoten. Denkbar ist der Einsatz eines Kommunikationsmodels auf Basis des Bluetooth-Standards, insbesondere des Bluetooth Low Energy Standards.

Zur Bereithaltung von Informationen ist es zweckmäßig, wenn der Ladungsträger wenigstens ein integriertes Speichermittel umfasst, um Informationen bezüglich des Ladungsträgerinhaltes und/oder der Zieldestination des Ladungsträgers und/oder dessen Herkunft und/oder Angaben über detektierte benachbarte Ladungsträger abzulegen. Beispielsweise kann eine Liste aller aktuell erreichbaren Ladungsträger hinterlegt sein. Alternativ oder zusätzlich kann ebenfalls eine Historie der Ladungsträger hinterlegt sein, die über einen gewissen Zeitraum in der Nachbarschaft des Ladungsträgers detektiert worden sind.

Ferner kann der Netzwerkprozessor derart ausgestaltet sein, sodass dessen Routing-Logik zyklisch oder alternativ eventbasierend benachbarte Netzwerkknoten detektiert. Der Netzwerkprozessor führt beispielsweise einen Scan aus, um benachbarte Ladungsträger innerhalb seiner Funkreichweite aufzuspüren und gegebenenfalls einen Datenaustausch mit diesen anzustoßen. Denkbar ist es ebenfalls, dass über den Scan alle Ladungsträger eines vermaschten Netzwerks detektiert werden, d.h. auch solche, die zwar außerhalb der Funkreichweite des Ladungsträgers liegen, aber mittelbar über Nachbarknoten erreicht werden können. Denkbar ist es ebenfalls, dass im Rahmen dieses Scans eine Informationsabfrage detektierter Nachbarknoten ausgeführt wird und das entsprechende Ergebnis im Speichermittel ablegbar ist.

Der Ladungsträger kann theoretisch beliebig ausgestaltet sein. Zweckmäßig ist die Konstruktion als Kiste, beispielsweise als Kunststoffkiste. Bekannt sind in diesem Zusammenhang vom Verband der Automobilindustrie (VDA) als Teil des KLT-Systems standardisierte Kunststoffkisten als Ladungsträger. Die benötigte Netzwerktechnologie und/oder etwaige Energiequellen können gekapselt in eine Seitenfläche oder die Bodenfläche eingebettet sein.

Neben der erfindungsgemäßen Ausstattung des Ladungsträgers mit der erforderlichen Netzwerktechnik wird dieses mittels eines oder mehrerer Anzeigemittel für ein Pick-by-Light (PBL) bzw. Put-to-Light (PTL) System erweitert. Insbesondere werden mehrere an der Umfangsfläche des Ladungsträgers angeordnete Blickfangleuchten installiert, die zur unterstützenden Visualisierung für den Kommissionierer gemäß einem konventionellen Pick- bzw. Put-to-Light System beitragen. Die Visualisierung erfolgt demnach jedoch nicht mehr an den entsprechenden Regalböden, sondern unmittelbar am Ladungsträger selbst. Dies spart Investitions- und Betriebskosten über den gesamten Warenstrom. Die notwendigen Steuersignale für die Visualisierung sind über das Kommunikationsmodul des Ladungsträgers empfangbar, d.h. über das vermaschte Netzwerk. Die Auswertung und Ansteuerung der Leuchtmittel kann über den Netzwerkprozessor oder eine zusätzliche Steuereinheit erfolgen.

Dabei sind die Blickfangleuchten über den Gesamtumfang des Ladungsträgers verteilt angeordnet, sodass sich ein Sichtfeld von 360° für den Kommissionierer abbilden lässt.

Die ein oder mehreren Anzeigemittel bzw. Blickfangleuchten ermöglichen eine farbliche Visualisierung über ein mehrfarbiges Farbspektrum. Eine mehrfarbige Visualisierung eröffnet neue Anwendungen, beispielsweise lassen sich dadurch Ladungsträger gesondert kennzeichnen und von anderen Ladungsträgern abheben. Die breitgefächerten neuen Einsatzmöglichkeiten können logistischer Natur sein. Beispielsweise könnte eine Abfrage der Frequenzdaten einer Materialgruppe und deren Artikel oder ganzer Lagerbereiche zu einer mittels der Leuchtstäbe visualisierten Heat-Map direkt am Lager- / Verbrauchsort führen. Ursprünglich nur "digital" aufbereitete Informationen werden hier ohne Umwege direkt visualisiert. Dementsprechend unkompliziert können ganze Lagerbereiche umsortiert bzw. angepasst werden. Durch das Heat-Map Konzept entsteht eine drastische Reduzierung der Prozesszeiten hinsichtlich Strukturoptimierung eines Lagers bzw. Versorgungsbereiches.

Denkbar ist auch ein produktionsseitiger Einsatz des oder der Anzeigemittel. Durch Verknüpfung der Ladungsträgerinformationen mit digitalen Arbeitsanweisungen ist es möglich, bezogen auf die chronologische Abfolge der Arbeitsschritte, das "Material" für das Fertigungspersonal visuell und auf Einzelartikel, Baugruppen wie auch Arbeitsplatzebene zu gruppieren. Zum Beispiel könnte an einem ersten Arbeitsplatz zum Montieren eines Motors das zum Fertigungsschritt benötigte Material durch farbliche Visualisierung des das Material beinhaltenden Ladungsträgers gekennzeichnet werden, beispielsweise leuchtet der Ladungsträger blau. An einem zweiten Arbeitsplatz zur Fertigung eines Cockpits könnte das dafür benötigte Material durch farbliche Visualisierung der entsprechenden Ladungsträger markiert werden, und zwar abweichend zur Markierung am ersten Arbeitsplatz mit der Farbe Grün.

Insbesondere ist ein Farbraum von etwa 16,6 Mio. Farben für ein oder mehrere Anzeigemittel denkbar. Als Anzeigemittel können bevorzugt ein oder mehrere Leuchtstäbe zum Einsatz kommen. Derartige Leuchtstäbe können flächig über den gesamten oder nahezu vollständigen Kantenverlauf einer Ecke des kistenförmigen Ladungsträgers angebracht sein. Idealerweise ist an jeder Ecke jeweils ein angeordneter Leuchtstab vorgesehen. Die Anzeigemittel bzw. Leuchtstäbe können eine verteilte Anordnung einer Vielzahl von RGB-LEDs umfassen.

Optional kann der erfindungsgemäße Ladungsträger zusätzlich mit einem elektronischen Etikett ausgestattet sein, wodurch sich ein äußerst flexibler Gestaltungsraum für die Etikettierung bietet. Notwendige Änderungen des Etiketts lassen sich schnell elektronisch vornehmen. Weiterhin bietet das elektronische Element zahlreiche Gestaltungsmöglichkeiten, so zum Beispiel ein Kundenbranding, die optionale Darstellung von Picking-Informationen, Revisionsständen und Bestandswerten. Durch die dauerhafte Befestigung des elektronischen Etiketts am Ladungsträger wird weiterhin das Verlustrisiko minimiert.

Das digitale Etikett basiert beispielsweise auf einem e-paper Displayelement, die als passive Displayelemente ohne aktive Beleuchtung auskommen und damit nicht nur besonders energieeffizient arbeiten, sondern konventionelle Papieretiketten realitätsnah simulieren.

Denkbar ist die Anordnung des Displayelementes über wenigstens zwei Seitenflächen des Ladungsträgers, insbesondere von einer Seitenfläche über den Kantenverlauf übergreifend auf eine weitere Seitenfläche des Ladungsträgers.

Allgemein besteht aufgrund der erfindungsgemäßen Ausstattung eine Kompatibilität des Ladungsträgers zum Bereich der "Augmented Reality (AR)". Die Möglichkeit der Nutzung der AR-Technik besteht bereits im Rahmen eines mit der erfindungsgemäßen Funktechnologie ausgestatteten Ladungsträgers, d.h. eines Ladungsträgers ohne ePaper Display und PBL Funktion. Die AR-Technik würde in dieser Situation quasi die physisch vorhandene Funktion des Displays und des PBL "virtuell' abbilden.

Neben dem erfindungsgemäßen Ladungsträger betrifft die vorliegende Erfindung ebenfalls ein System aus wenigstens zwei Ladungsträgern gemäß der vorliegenden Erfindung. Das System weist folglich dieselben Vorteile und Eigenschaften auf, wie der erfindungsgemäße Ladungsträger, weshalb an dieser Stelle auf eine wiederholende Beschreibung verzichtet wird.

Die wenigstens zwei Ladungsträger bilden ein vermaschtes Netzwerk zum Zwecke der Nachbardetektion und/oder des Datenaustausches. Der erfindungswesentliche Vorteil des erfindungsgemäßen Systems besteht darin, dass ein Kommunikationsnetz ohne zusätzliche Infrastruktur stabil aufbaubar ist.

Ergänzend zu den jeweiligen Ladungsträgern ist es zweckmäßig, wenn wenigstens eine neutrale Leseeinheit als optionaler Netzwerkknoten in das vermaschte Netzwerk der Ladungsträger eingebunden ist. Diese Leseeinheit umfasst Kommunikationsmittel zur Kommunikation mit wenigstens einem Ladungsträger des Netzwerkes, insbesondere Mittel zur bidirektionalen Kommunikation mit wenigstens einem Ladungsträger. Dadurch lassen sich vorzugsweise Informationen aus dem Speichermittel wenigstens eines Ladungsträgers auslesen oder alternativ Informationen an den Ladungsträger zur Speicherung innerhalb des Speichermittels übertragen.

Die Leseeinheit kann eine Verwaltungseinheit sein, die eine zentrale Datenverarbeitung zumindest eines Teils der im Netzwerk verfügbaren Daten übernimmt. Dazu zählt beispielsweise die Übernahme administrativer Aufgaben hinsichtlich des Logistikprozesses der Ladungsträger und/oder hinsichtlich der Netzwerkorganisation des Kommunikationsnetzes.

Beispielsweise kann durch eine zentrale Verwaltungseinheit der Speicher einzelner Ladungsträger beschrieben werden, so beispielsweise mit dem jeweiligen Inhalt der Ladungsträger bzw. der Zieldestination oder dessen Herkunftsadresse. Denkbar ist es ebenfalls, dass die Verwaltungseinheit entsprechende Steuermittel für die Implementierung eines PBL-Systems umfasst und durch geeignete Ansteuerung der einzelnen Ladungsträger über das gebildete Netzwerk eine Visualisierung zur Kommissionierung direkt am Ladungsträger gestattet.

Ferner kann die Verwaltungseinheit Analysemittel zur Auswertung der empfangenen Informationen aufweisen, insbesondere zum Zweck der Positionsbestimmung und/oder der Bestimmung der Transportpfade und/oder der Bestimmung von Wegzeiten ein oder mehrerer Ladungsträger. Denkbar ist ein ständiger Datenaustausch zwischen den einzelnen Ladungsträgern und der Verwaltungseinheit. Dadurch lassen sich zur Laufzeit sämtliche Ladungsträger genau innerhalb des Netzwerkes verorten. Ferner kann anhand dieser Positionsinformationen der genau zurückgelegte Transportpfad einzelner Ladungsträger nachgestellt werden. Ferner kann anhand des zurückgelegten Transportpfades die benötigte Wegzeit für die Transportstrecke kalkuliert bzw. berechnet werden.

Weiterhin dienen diese ausgewerteten Daten für die Bestimmung des Echtzeitzustandes des gesamten Logistiksystems. Dies eröffnet zudem weitere Möglichkeiten, insbesondere eine statistische Auswertung des Warenstroms, was insbesondere für die weitere Optimierung des Gesamtsystems wünschenswert ist.

Als neutrales Lesegerät bzw. Verwaltungseinheit kann grundsätzlich jede netzwerkfähige Rechnereinheit zum Einsatz kommen, die mit einem passenden Funkmodul zur Einbindung in das vermaschte Netzwerk ausgestattet ist. Die zuvor genannte Funktionalität der Verwaltungseinheit wird vorzugsweise durch eine auf der Rechnereinheit ausgeführte Applikation bereitgestellt. Als Rechnereinheit kann grundsätzlich ein geeigneter Arbeitsplatzrechner zum Einsatz kommen, jedoch ebenfalls denkbar sind mobile Endgeräte, beispielsweise Laptops, Smartphones, Tablets, etc., auf denen die entsprechende Applikation ausführbar ist.

Die Erfindung betrifft weiterhin ein Verfahren zur Organisation und Verfolgung von in einem Ladungsträger aufgenommenen Transportgütern. Erfindungsgemäß kennzeichnet sich das Verfahren dadurch, dass wenigstens zwei Ladungsträger auf Grundlage eines vermaschten Netzwerkes miteinander kommunizieren. Die Ladungsträger sind zweckmäßigerweise gemäß der vorliegenden Erfindung ausgestaltet. Eine Vielzahl von Ladungsträgern kann ohne Infrastruktur über ein vermaschtes Netzwerk miteinander kommunizieren, wodurch nicht nur eine Positionsbestimmung einzelner Ladungsträger ermöglicht wird, sondern weiterhin eine Möglichkeit zur einmaligen, zyklischen oder kontinuierlichen Echtzeitanalyse des Systems durch eine zentrale Verwaltungseinheit geschaffen wird.

Weitere Vorteile und Einzelheiten der Erfindung sollen im Folgenden anhand eines in den Figuren dargestellten Ausführungsbeispiels näher erläutert werden. Es zeigen:
- Figur 1:: eine perspektivische Seitenansicht des erfindungsgemäßen Ladungsträgers und
- Figur 2:: eine beispielhafte Darstellung des Netzaufbaus aus einer Vielzahl von erfindungsgemäßen Ladungsträgern.

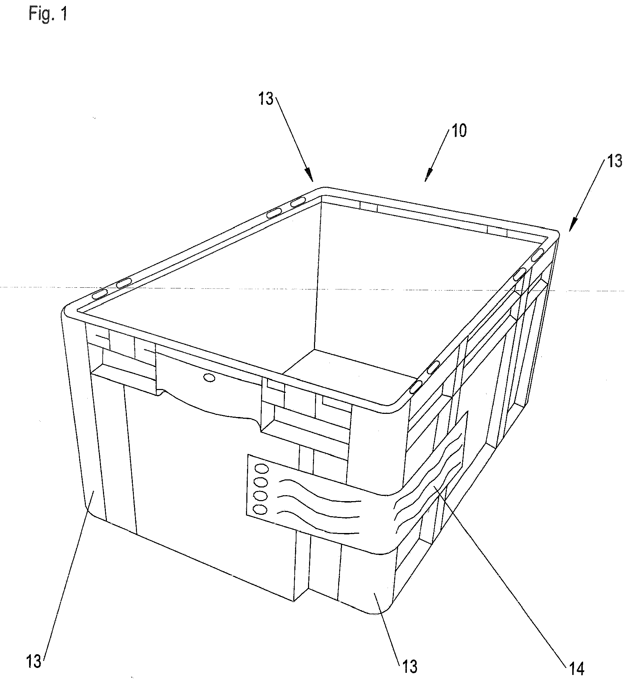

Figur 1 zeigt eine perspektivische Seitendarstellung der erfindungsgemäßen Lösung zur Konstruktion eines Kleinladungsträgers gemäß dem KLT-Standard des Verbands der Automobilindustrie. Der kistenartige Ladungsträger 10 ist deckellos und aus Kunststoff gefertigt. Die Ladungsträger 10 lassen sich modular auf der Grundfläche einer Euro-Palette oder einer ISO-Palette stapeln. Die Kistengröße, d.h. das Ladevolumen, kann variieren. Es können auch Ladungsträger unterschiedlicher Abmessung gestapelt werden. Für die Umsetzung der erfindungsgemäßen Idee ist die eigentliche Form und Ausgestaltung des Ladungsträgers nicht wesentlich, die Erfindung wird jedoch im Folgenden anhand des dargestellten Kleinladungsträgers 10 erläutert.

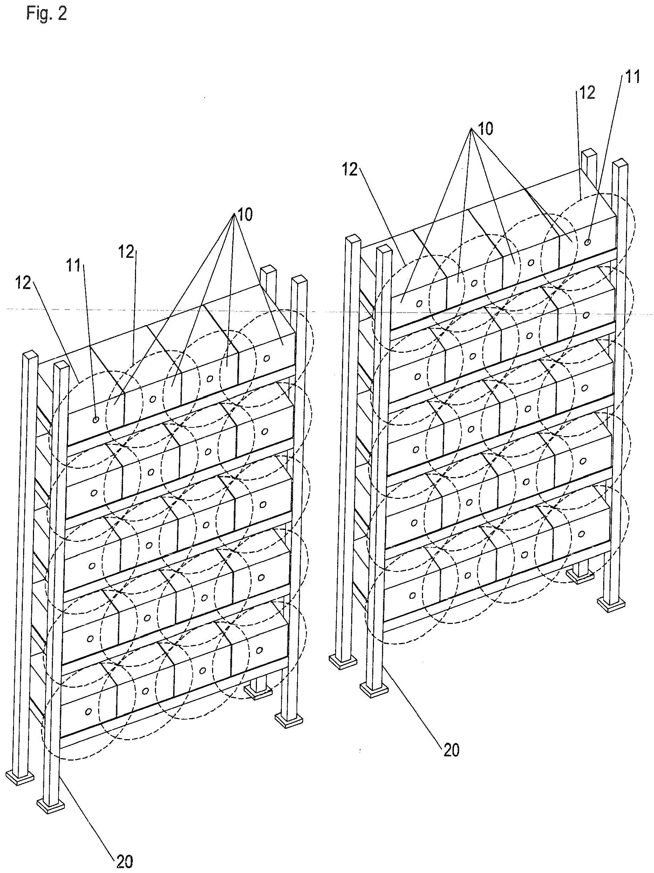

Hauptelement und somit technisch innovativ ist die erstmalige Eigenintelligenz dieses Ladungsträgers 10. Durch eine in die Modulbox 10 integrierte Funktechnologie 11 (s. Figur 2) in Kombination mit einem geeigneten Netzwerkprozessor wird jeder einzelne Ladungsträger 10 zu einem intelligenten Netzwerkknoten, der in der Lage ist, Informationen zu empfangen, weiterzuleiten und bereitzustellen.

Als notwendige Hardware kommt eine Funklösung mit geringer Reichweite und besonders niedrigem Stromverbrauch zum Einsatz, die mit einem entsprechenden Mikroprozessor als Netzwerkprozessor kombiniert wird und innerhalb des Ladungsträgers, beispielsweise in einem entsprechenden Hohlraum einer Seiten- oder Bodenfläche des Ladungsträgers 10 untergebracht wird. Denkbar ist beispielsweise eine Anordnung der Funkt- bzw. Netzwerktechnologie hinter einem der Leuchtstäbe 13. Ein langlebiger Akkumulator kann ebenfalls als Energiespeicher integriert werden. Darüber hinaus ist ein integrierter und mit dem Netzwerkprozessor kommunikativ verbundener Speicher vorgesehen, in den etwaigen Informationen bezüglich des Ladungsträgerinhaltes, der Zielbestimmung des Inhaltes sowie weitere logistische Informationen abgelegt bzw. ablegbar sind. Zudem werden Informationen zu den innerhalb des vermaschten Kommunikationsnetzes detektierten Nachbarschaftsknoten bereitgehalten und ständig aktualisiert.

Werden mehrere Ladungsträger 10 gemäß Figur 1 zusammengebracht, beispielsweise durch Unterbringung in einem Lagerregal 20 gemäß Figur 2, so agieren die einzelnen intelligenten Ladungsträger 10 als Netzwerknoten und bauen selbständig und automatisch ein vermaschtes Ad-Hoc Netzwerk auf, das auch regalübergreifende Ausmaße annehmen kann. Durch ein spezielles eigenentwickeltes Mesh-Protokoll wird die Kommunikation der einzelnen Ladungsträger 10 untereinander geregelt und ein direkter oder mittelbarer bidirektionaler Informationsaustausch zwischen beliebigen Netzwerknoten 10 innerhalb des Netzwerkes ermöglicht. Eine übergeordnete Infrastruktur wird nicht mehr verlangt.

Der Funkradius bzw. Funkbereich eines jeden Ladungsträgers 10 ist in Figur 2 mit dem Bezugszeichen 12 gekennzeichnet. In der idealisierten Darstellung der Figur 2 beschränkt sich der Reichweitenradius der eingesetzten Funkmodule auf unmittelbar benachbarte Ladungsträger 10, so dass weiter entfernte Ladungsträger 10 nur mittelbar über dazwischenliegende Knoten 10 erreicht werden können. Aufgrund der Nähe der Ladungsträger 10 im Regal 20 ist die kurze Reichweite 12 jedoch ausreichend, so dass der Energiebedarf des eingesetzten Funkmoduls bzw. des eingesetzten Transmitters 11 sehr gering ist. Durch jeden hinzukommenden Netzwerkknoten 10 wird das gesamte Kommunikationsnetz zudem stabiler und vor allem ausfallsicherer. Dies gilt insbesondere auch hinsichtlich möglicher Interferenzen.

Ein weiterer maßgeblicher Vorteil des erfindungsgemäßen Ladungsträgers 10 liegt in dessen Beleuchtungskonzept. Bisherige Pick-by-Light System sahen Beleuchtungsmittel am Regalboden und nicht am Ladungsträger selbst vor. Die Erfindung beschreitet nun einen davon abweichenden Lösungsweg, indem die notwendigen Anzeigemittel direkt in den erfindungsgemäßen Ladungsträger 10 integriert werden. Im Beispiel der Figur 1 erfolgt dies durch die flächig an den Ecken angebrachten Leuchtstäbe 13. Zudem waren die bisherigen PBL-Systeme auf statische und punktuelle Blickfangleuchten am Regalboden beschränkt. Die gemäß der Erfindung eingesetzten Leuchtmittel 13 sind demgegenüber in der Lage, ein Farbspektrum von 16,6 Mio. Farben abzubilden. Hierdurch entsteht die Möglichkeit einzelne Aufgabenstellungen bzw. Routinen visuell differenziert darzustellen. Neue Einsatzgebiete entstehen, basierend auf der gleichen technologischen Basis ohne weitere Investitionen.

Die flächig an den Ecken angebrachten Leuchtstäbe 13 erleichtern zudem die Identifizierung. Herkömmliche Systeme waren nicht in der Lage, ohne Verdopplung der Investitionskosten ein 360° Sichtfeld abzubilden, was durch die über den Umfang verteilte Anordnung der Leuchtstäbe 13 problemlos erreicht wird. Weiterhin kann der Ladungsträger 10 zusätzlich ein Anzeigendisplay und je nach System ein bzw. mehrere Quittierknöpfe umfassen. Das Anzeigendisplay sowie die Quittierungsknöpfe können gegebenenfalls auch durch das nachfolgend beschriebene Etikett bereitgestellt werden.

Wird ein Kommissionierauftrag gestartet, signalisieren die Blickfangleuchten 13 die Auftragszugehörigkeit. Selbst ohne Kenntnis der Lagerstruktur wird keine Zeit für das Suchen der Ware verloren. Das Einlesen in den Kommissionierauftrag ist ebenfalls nicht notwendig, da benötigte Entnahmemengen auf dem Anzeigendisplay erscheinen können. Die Entnahme der Menge wird abschließend mittels des Quittierknopfs bestätigt und gebucht.

Die Integration der Leuchtstäbe eröffnet zudem zusätzliche Einsatzmöglichkeiten. Die breitgefächerten neuen Einsatzmöglichkeiten können logistischer Natur sein. Beispielsweise könnte eine Abfrage der Frequenzdaten einer Materialgruppe und deren Artikel oder ganzer Lagerbereiche zu einer mittels der Leuchtstäbe visualisierten Heat-Map direkt am Lager- / Verbrauchsort führen. Ursprünglich nur "digital" aufbereitete Informationen werden hier ohne Umwege direkt visualisiert. Dementsprechend unkompliziert können ganze Lagerbereiche umsortiert bzw. angepasst werden. Durch das Heat-Map Konzept entsteht eine drastische Reduzierung der Prozesszeiten hinsichtlich Strukturoptimierung eines Lagers bzw. Versorgungsbereiches.

Denkbar ist auch ein produktionsseitiger Einsatz des oder der Anzeigemittel. Durch Verknüpfung der Ladungsträgerinformationen mit digitalen Arbeitsanweisungen ist es möglich, bezogen auf die chronologische Abfolge der Arbeitsschritte, das "Material" für das Fertigungspersonal visuell und auf Einzelartikel, Baugruppen wie auch Arbeitsplatzebene zu gruppieren. Zum Beispiel könnte an einem ersten Arbeitsplatz zum Montieren eines Motors das zum Fertigungsschritt benötigte Material durch farbliche Visualisierung des das Material beinhaltenden Ladungsträgers gekennzeichnet werden, beispielsweise leuchtet der Ladungsträger blau. An einem zweiten Arbeitsplatz zur Fertigung eines Cockpits könnte das dafür benötigte Material durch farbliche Visualisierung der entsprechenden Ladungsträger markiert werden, und zwar abweichend zur Markierung am ersten Arbeitsplatz mit der Farbe Grün.

Die visuelle Schnittstelle zum Benutzer wird abschließend um ein digitales Etikett 14 erweitert. Dieses Etikett 14 ist über die Kante zweier Außenflächen des Ladungsträgers 10 gelegt und fest mit der Außenfläche verbunden. Als Anzeige kommt ein e-Paper Displayelement zur Anwendung, um die gewünschten Etikettinformationen darstellen zu können. Gegenüber einer papiergebundenen Warenauszeichnung und den damit verbundenen administrativen Aufgaben reduziert dies die Kosten des laufenden Betriebes um ca. 40% bezugnehmend auf reine Materialetiketten. Weiterführende und dadurch neu entstehende Möglichkeiten wie Kundenbranding, Picking-Information, Revisionsstände, Bestandswerte, etc. außen vorgelassen.

Zudem kann bei Bedarf eine optionale Verwaltungseinheit in das Ad-hoc-Netzwerk eingebettet werden, die mittels eines speziell entwickelten Algorithmus die zusammengetragenen Daten der einzelnen Ladungsträger 10 des Maschnetzwerkes auswertet und dadurch eine Positionsbestimmung, Transportpfadbestimmung und entsprechende Wegzeitberechnungen für einzelnen Ladungsträger 10 erstellt. Darauf basierend kann optional eine weitergehende Auswertung erfolgen, um den Echtzeitzustand des Gesamtsystems zu ermitteln bzw. zu überwachen oder den logistischen Ablauf statistisch zu analysieren bzw. zu optimieren.

Allgemein besteht aufgrund der erfindungsgemäßen Ausstattung eine Kompatibilität des Ladungsträgers 10 zum Bereich der "Augmented Reality (AR)". Die Möglichkeit der Nutzung der AR-Technik besteht bereits im Rahmen eines mit der erfindungsgemäßen Funktechnologie 11 ausgestatteten Ladungsträgers 10, d.h. eines Ladungsträgers 10 ohne ePaper Display 14 und PBL Funktion 13. Die AR-Technik würde in dieser Situation quasi die physisch vorhandene Funktion des Displays 14 und des PBL 13 "virtuell' abbilden.

Ergänzend wird darauf hingewiesen, dass der selbsttätige Netzwerkaufbau nicht nur für einen stationären Zustand der Ladungsträger, d.h. bei der stationären Lagerung innerhalb eines Regals, auf einer Palette oder an einem sonstigen Lagerort möglich ist, sondern ein Netzwerkaufbau auch bei bewegten Ladungsträgern möglich ist, wenn diese beispielsweise durch ein Transportmittel bewegt, insbesondere durch ein Transportband befördert werden.

## Patentansprüche

1. Ladungsträger (10) zur Aufnahme ein oder mehrerer Transportgüter in einem Laderaum, umfassend:
ein Kommunikationsmodul (11) zur bidirektionalen Kommunikation, und
mehrere Anzeigemittel (13) für ein Pick-by-Light/Put-to-Light-System, wobei
die mehreren Anzeigemittel (13) Blickfangleuchten umfassen,
**dadurch gekennzeichnet, dass**
die Blickfangleuchten verteilt über den Gesamtumfang des Ladungsträgers angeordnet sind, und
das Kommunikationsmodul dazu ausgelegt ist, eine bidirektionale Kommunikation mit einem weiteren Ladungsträger (10) aufzunehmen,
wobei die Anzeigemittel (13) eine farbliche Visualisierung über ein mehrfarbiges Farbspektrum ermöglichen und wobei die Anzeigemittel flächig an jeder Ecke des Ladungsträgers (10) angeordnete Leuchtstäbe umfassen.

2. Ladungsträger (10) gemäß Anspruch 1, **dadurch gekennzeichnet, dass** der Ladungsträger (10) wenigstens einen Netzwerkprozessor mit integrierter Routinglogik zum Aufbau eines vermaschten Netzwerkes mit wenigstens einem weiteren Ladungsträger (10) umfasst.

3. Ladungsträger (10) nach Anspruch 1 oder 2, **dadurch gekennzeichnet, dass** es sich bei dem Kommunikationsmodul (11) um ein Funkmodul zur drahtlosen Kommunikation mit wenigstens einem weiteren Ladungsträger (10) handelt, insbesondere um ein Funkmodul mit kurzer Reichweite und niedrigem Stromverbrauch, wobei der Reichweitenradius des Funkmoduls vorzugsweise im Bereich von 1m bis 10m liegt.

4. Ladungsträger (10) nach einem der vorhergehenden Ansprüche, **dadurch gekennzeichnet, dass** wenigstens ein Speichermittel vorgesehen ist, um Informationen bezüglich des Ladungsträgerinhaltes und/oder der Zieldestination des Ladungsträgers (10) und/oder dessen Herkunft und/oder über benachbarte Ladungsträger (10) abzulegen und bereitzustellen.

5. Ladungsträger (10) nach einem der vorhergehenden Ansprüche, **dadurch gekennzeichnet, dass** der Netzwerkprozessor derart ausgestaltet ist, so dass zyklisch oder event-basierend benachbarte Netzwerkknoten detektiert und/oder abgefragt werden und das Ergebnis im Speichermittel abgelegt wird.

6. Ladungsträger (10) nach einem der vorhergehenden Ansprüche, **dadurch gekennzeichnet, dass** der Ladungsträger (10) eine Kiste aus Kunststoff ist, die vom Verband der Automobilindustrie (VDA) als Teil des KLT-Systems standardisiert ist.

7. Ladungsträger (10) nach einem der vorhergehenden Ansprüche, **dadurch gekennzeichnet, dass** die Anzeigemittel (13) eine farbliche Visualisierung über ein Farbspektrum von 16, 6 Mio. Farben ermöglichen.

8. Ladungsträger (10) nach einem der vorhergehenden Ansprüche, **dadurch gekennzeichnet, dass** wenigstens ein digitales Etikett (14) am Ladungsträger (10) angeordnet ist, vorzugsweise an wenigstens einer Seitenfläche des Ladungsträgers (10), wobei das Etikett (14) bevorzugt mindestens ein e-paper Displayelement ist.

9. System aus wenigstens zwei Ladungsträgern (10) gemäß einem der vorhergehenden Ansprüche, wobei die wenigstens zwei Ladungsträger (10) ein vermaschtes Netzwerk zum Zwecke der Nachbarknotendetektion und/oder des Datenaustauschs bilden.

10. System nach Anspruch 9, **dadurch gekennzeichnet, dass** wenigstens eine neutrale Leseeinheit, insbesondere wenigstens eine Verwaltungseinheit, als optionaler Netzwerkknoten in das vermaschte Netzwerk der Ladungsträger (10) eingebunden ist, die Kommunikationsmittel zur Kommunikation, insbesondere bidirektionalen Kommunikation, mit wenigstens einem Ladungsträger (10) umfasst, insbesondere zum Auslesen von Informationen aus dem Speichermittel wenigstens eines Ladungsträgers (10) und/oder zur Übermittlung von innerhalb des Speichermittels zu speichernden Informationen an wenigstens einen Ladungsträger (10).

11. System nach Anspruch 10, **dadurch gekennzeichnet, dass** die Verwaltungseinheit ein Steuermittel für eine PBL-Implementierung und/oder ein Analysemittel zur Auswertung der empfangenen Informationen umfasst, insbesondere zum Zweck der Positionsbestimmung und/oder der Transportpfade und/oder Wegzeiten ein oder mehrerer Ladungsträger (10).

12. System nach Anspruch 11, **dadurch gekennzeichnet, dass** das Analysemittel der Verwaltungseinheit weiterhin auf Grundlage der ladungsträgerspezifisch ermittelten Informationen den Echtzeitzustand des Systems bestimmt und/oder eine statistische Auswertung des Warenstroms vornimmt.

13. System nach einem der vorhergehenden Ansprüche, **dadurch gekennzeichnet, dass** die wenigstens zwei Ladungsträger (10) an einem stationären Lagerort gelagert sind, vorzugsweise in einem Regal gelagert oder auf einer Euro- oder ISOpalette gestapelt sind, und/oder mittels eines Transportmittels in Bewegung versetzt sind.

14. Verfahren zur Organisation und Verfolgung von in einem Ladungsträger (10) aufgenommenen Transportgütern, wobei wenigstens zwei Ladungsträger (10), gemäß einem der Ansprüche 1 bis 8, auf Grundlage eines vermaschten Netzwerkes miteinander kommunizieren.

15. Verfahren nach Anspruch 14, **dadurch gekennzeichnet, dass** auf Grundlage des Datenaustauschs benachbarter Ladungsträger (10) eine Positionsbestimmung und/oder Transportpfadbestimmung und/oder Wegzeitbestimmung für zumindest einen Ladungsträger (10) erfolgt und basierend auf den ladungsträgerspezifischen Informationen eine Echtzeitauswertung und/oder statistische Auswertung des Warenstroms erfolgt.

## Claims

1. Load carrier (10) for the take-up of one or multiple transport goods in a loading space, comprising:
a communication module (11) for bidirectional communication, and
multiple display elements (13) for a pick-by-light/put-to-light system, wherein the multiple display elements (13) comprise eye-catcher lamps,
**characterized in that**
the eye-catcher lamps are arranged so as to be distributed around the entire periphery of the load carrier, and
the communication module is adapted to establish bidirectional communication with a further load carrier (10),
wherein the display elements (13) make a colored visualization possible across a multicolored color spectrum, and wherein the display elements include lighting sticks arranged planarly on each corner of the load carrier (10).

2. Load carrier (10) according to claim 1, **characterized in that** the load carrier (10) comprises at least one network processor with integrated routing logics for the establishing of a meshed network with at least one further load carrier (10).

3. Load carrier (10) according to claim 1 or 2, **characterized in that** the communication module (11) is a radio module for wireless communication with at least one further load carrier (10), in particular a radio module with short range and low power consumption, wherein the range radius of the radio module preferably is in the range of 1 m to 10 m.

4. Load carrier (10) according to any one of the preceding claims, **characterized in that** at least one storage element is provided, in order to store and provide information about the content of the load carrier and/or the target destination of the load carrier (10) and/or its origin and/or about neighboring load carriers (10).

5. Load carrier (10) according to any one of the preceding claims, **characterized in that** the network processor is configured in such a way that neighboring network nodes are detected and/or queried cyclically or event-driven, and the result is stored in the storage element.

6. Load carrier (10) according to any one of the preceding claims, **characterized in that** the load carrier (10) is a box of plastic, which is standardized by the German Association of the Automotive Industry (VDA) as a part of the KLT system.

7. Load carrier (10) according to any one of the preceding claims, **characterized in that** the display elements (13) make a colored visualization possible across a color spectrum of 16.6 million colors.

8. Load carrier (10) according to any one of the preceding claims, **characterized in that** at least one digital label (14) is arranged on the load carrier (10), preferably on at least one side surface of the load carrier (10), wherein the label (14) preferably is at least one e-paper display element.

9. System of at least two load carriers (10) according to any one of the preceding claims, wherein the at least two load carriers (10) form a meshed network for the purpose of neighbor node detection and/or data exchange.

10. System according to claim 9, **characterized in that** at least one neutral reader unit, in particular at least one management unit, is involved as an optional network node in the meshed network of load carriers (10), which unit comprises communication means for communication, in particular bidirectional communication, with at least one load carrier (10), in particular for reading information from the storage element of at least one load carrier (10) and/or for transmitting information to be stored in the storage element to at least one load carrier (10).

11. System according to claim 10, **characterized in that** the management unit comprises a control means for a PBL implementation and/or an analysis means for evaluating the received information, in particular for the purpose of determining the position and/or the transport paths and/or transport periods of one or more load carrier (10).

12. System according to claim 11, **characterized in that** the analysis means of the management unit further determines the real time state of the system based upon the load carrier-specific determined information and/or performs a statistic evaluation of the flow of goods.

13. System according to any one of the preceding claims, **characterized in that** the at least two load carriers (10) are stored on a stationary storage location, preferably in a shelf, or stacked on a Euro palette or ISO palette, and/or are put into movement by means of a transport means.

14. Method for organizing and tracking of transport goods received in a load carrier (10), wherein at least two load carriers (10), according to any of claims 1 to 8, communicate with one another on the basis of a meshed network.

15. Method according to claim 14, **characterized in that** a position determination and/or transport path determination and/or transport period determination for at least one load carrier (10) is performed on the basis of the data exchange of neighboring load carriers (10), and a real-time evaluation and/or statistic evaluation of the flow of goods is performed on the basis of the information specific to the load carriers.

## Revendications

1. Porteur de charge (10) destiné à recevoir un ou plusieurs produits à transporter dans un espace de chargement, comprenant :
un module de communication (11) destiné à la communication bidirectionnelle, et
plusieurs moyens d'indication (13) pour un système « pick by light / put to light », les plusieurs moyens d'indication (13) comprenant des voyants attrape-regard,
**caractérisé en ce que**
les voyants attrape-regard sont disposés répartis sur toute la périphérie du porteur de charge, et
le module de communication est configuré pour engager une communication bidirectionnelle avec un autre porteur de charge (10),
les moyens d'indication (13) permettant une visualisation en couleurs dans une gamme de couleurs comprenant plusieurs couleurs et les moyens d'indication comprenant des bâtons lumineux disposés à plat à chaque coin du porteur de charge (10).

2. Porteur de charge (10) selon la revendication 1, **caractérisé en ce qu'**il comprend au moins un processeur de réseau doté d'une logique de routage intégrée pour l'établissement d'un réseau maillé avec au moins un autre porteur de charge (10).

3. Porteur de charge (10) selon la revendication 1 ou 2, **caractérisé en ce que** le module de communication (11) est un module radio destiné à la communication sans fil avec au moins un autre porteur de charge (10), en particulier un module radio à courte portée et à faible consommation de courant, le rayon de portée du module radio se trouvant de préférence dans la plage de 1 m à 10 m.

4. Porteur de charge (10) selon l'une des revendications précédentes, **caractérisé en ce qu'**au moins un moyen de mémorisation est prévu pour mémoriser et mettre à disposition des informations concernant le contenu du porteur de charge et/ou la destination du porteur de charge (10) et/ou sa provenance et/ou concernant des porteurs de charge (10) voisins.

5. Porteur de charge (10) selon l'une des revendications précédentes, **caractérisé en ce que** le processeur de réseau est conçu de telle manière que des noeuds de réseau voisins sont détectés et/ou interrogés de manière cyclique ou en fonction d'événements et que le résultat est mémorisé dans le moyen de mémorisation.

6. Porteur de charge (10) selon l'une des revendications précédentes, **caractérisé en ce qu'**il s'agit d'une caisse en matière plastique qui est normalisée par le Verband der Automobilindustrie (VDA, Union de l'industrie automobile allemande) comme faisant partie du système de conteneurs pour petites charges.

7. Porteur de charge (10) selon l'une des revendications précédentes, **caractérisé en ce que** les moyens d'indication (13) permettent une visualisation en couleurs dans une gamme de couleurs de 16,6 millions de couleurs.

8. Porteur de charge (10) selon l'une des revendications précédentes, **caractérisé en ce qu'**au moins une étiquette numérique (14) est disposée sur le porteur de charge (10), de préférence sur au moins une surface latérale du porteur de charge (10), l'étiquette (14) étant de préférence au moins un élément d'affichage e-paper.

9. Système comprenant au moins deux porteurs de charge (10) selon l'une des revendications précédentes, dans lequel les au moins deux porteurs de charge (10) forment un réseau maillé à des fins de détection de noeuds voisins et/ou d'échange de données.

10. Système selon la revendication 9, **caractérisé en ce qu'**au moins une unité de lecture neutre, en particulier au moins une unité de gestion, est intégrée comme noeud de réseau facultatif dans le réseau maillé des porteurs de charge (10),laquelle comprend des moyens de communication destinés à la communication, en particulier la communication bidirectionnelle, avec au moins un porteur de charge (10), en particulier pour la lecture d'informations du moyen de mémorisation d'au moins un porteur de charge (10) et/ou pour la transmission d'informations à enregistrer dans le moyen de mémorisation à au moins un porteur de charge (10).

11. Système selon la revendication 10, **caractérisé en ce que** l'unité de gestion comprend un moyen de commande pour la mise en oeuvre d'un système PBL et/ou un moyen d'analyse pour l'évaluation des informations reçues, en particulier à des fins de détermination de position et/ou des chemins de transport et/ou temps de trajet d'un ou de plusieurs porteurs de charge (10).

12. Système selon la revendication 11, **caractérisé en ce que** le moyen d'analyse de l'unité de gestion détermine en outre l'état en temps réel du système en se basant sur les informations déterminées spécifiquement pour le porteur de charge et/ou effectue une évaluation statistique du flux de marchandises.

13. Système selon l'une des revendications précédentes, **caractérisé en ce que** les au moins deux porteurs de charge (10) sont stockés dans un lieu de stockage stationnaire, de préférence stockés dans un rayonnage ou empilés sur une palette Europe ou palette ISO, et/ou sont mis en mouvement au moyen d'un moyen de transport.

14. Procédé d'organisation et de suivi de produits à transporter reçus dans un porteur de charge (10), au moins deux porteurs de charge (10) selon l'une des revendications 1 à 8 communiquant l'un avec l'autre sur la base d'un réseau maillé.

15. Procédé selon la revendication 14, **caractérisé en ce que**, sur la base de l'échange de données de porteurs de charge (10) voisins, une détermination de la position et/ou une détermination du chemin de transport et/ou une détermination du temps de trajet est effectuée pour au moins un porteur de charge (10) et sur la base des informations spécifiques du porteur de charge, une évaluation en temps réel et/ou une évaluation statistique du flux de marchandises est effectuée.
